# EUROPEAN PATENT APPLICATION

(11) **EP 2 166 503 A1**
(43) Date of publication of application: **24.03.2010**
(21) Application number: 09011461.2
(22) Date of filing: 07.09.2009
(51) Int. Cl.: G06Q 30/00

(54) **Tariff management deployment automation**

(30) Priority: 05.09.2008 MY 0803432
(71) Applicant: ACCENTURE Global Services GmbH, 8200 Schaffhausen (CH)
(72) Inventor: How, Adrian Envin, 52200 Kuala Lumpur (MY); Mei Ping Kua, Jasmine, 47810 Petalling Jaya Selangor (MY); Yip Lau, Kin, Tamas Maluri Cheras, KL (MY); Hon Wong, Ming, 55100 Kuala Lumpur (MY)
(74) Representative: Müller-Boré & Partner Patentanwälte

(57) **Abstract**

A method for an operator to deploy tariff and/or billing configurations represented by computer program code, the deployment being effected by operation of a user interface, the method including the steps of the operator identifying at least one configuration to be deployed, selecting the at least one configuration by use of the user interface, and associating the at least one configuration with at least one environment in which the computer program code representing the configuration must be executed to effect the configuration.

## Description

### FIELD OF THE INVENTION

The present invention relates to a system and method, in particular a computer implemented method of deploying data relating to products and/or services. The invention is particularly useful for deploying configuration data relating to new tariff and/or billing plans for products and/or services for a telecommunication service provider thus allowing the creation and execution of test data with respect to configurations.

### BACKGROUND OF THE INVENTION

The telecommunications industry is highly competitive and this has resulted generally from regulatory changes in most countries around the world seeking to deregulate the provision of telecommunication services. As the reform of the telecommunication services industries has evolved, consumers have been provided with an increasing number of products and services at a lower cost.

At the present time, the telecommunications industry worldwide is facing four major trends. Firstly, changing consumer requirements are evolving towards more personalized on-demand content and services. In the past, highly regulated telecommunications industries provided relatively few alternatives with respect to the packaging of products and/or services and consumers were required to select the most appropriate products and/or services from the relatively few offerings. However, with deregulation, the number of products and/or services has increased dramatically and consumers are displaying an increasing preference to group products and/or services according to their personal preferences. In this respect, the consumers preferences include both the products and/or services that the consumer requires and the preferred billing arrangements for those products and/or services.

Secondly, with the increased competition in the industry, individual telecommunication service providers are competing for the available revenue of consumers. In addition to the telecommunication service providers competing with each other, increasingly these providers are required to compete for revenue with alternative business models such as Mobile Virtual Network Operators (MVNO's).

Thirdly, the rapid pace of developments in information technology and telecommunications technology is enabling telecommunication service providers to develop a common platform for building and integrating real-time, converged IP (Internet Protocol) and legacy services. As a result, telecommunication service providers increasingly need to take advantage of the developments in information technology in order to obtain increased efficiency with respect to the delivery of their products and/or services in order to remain competitive.

Fourthly, as the reform of telecommunications industries around the world continues, present "barriers to entry" to specific consumer markets will most likely not exist in the future. For example, cell phone number portability between telecommunication service providers is being mandated in various countries around the world to prevent consumers from being "locked-in" to a particular telecommunication service provider. This particular reform will allow a consumer to change telecommunication service provider without the loss of their cell phone number. Whilst the introduction of this reform may vary from country to country, there is a clear intention in most countries with well developed telecommunications services to provide consumers with portability such that they can elect to choose a new telecommunication service provider without the loss of their cell phone number (sometimes referred to as mobile number or handset number). Presently many consumers are discouraged from selecting a new telecommunication service provider, despite a new provider's efforts to offer less costly services, as the transition will require them to abandon their old cell phone number with the consequent requirement to advise all their contacts (family, friends and business associates) of their new cell phone number.

In any event, due to constantly changing consumer trends, regulatory shifts and intense competition, there is a need to frequently introduce new and innovative bill plans and promotions and to reduce the time-to market for these services.

In view of the aforementioned emerging trends, telecommunication service providers must take action to preserve or increase the competitiveness of their offerings.

Presently, reacting to changing consumer requirements is particularly difficult for telecommunication service providers. The generation of configurations for new tariff and/or billing plans for products and/or services presents a difficult problem as it is necessary for a telecommunications service provider to fully test a configuration for any new proposed tariff and/or billing plan before offering same to consumers. Having devised a new tariff and/or billing plan for products and/or services, it is necessary for the telecommunication service provider to deploy the proposed new plan configuration into multiple data bases.. Further, having deployed newly devised configurations, it is necessary to fully test the new configurations across different accounts and service instances (for example, cell telephony, fixed line telephony and/or provision of an internet service) to ensure the tariff and/or billing configurations operate correctly and, if implemented, will invoice consumers accurately according to the published tariff and/or billing plan details.

Presently, the process of generating a configuration for a new tariff or billing plan, deploying and testing same is predominantly a manual process requiring operators of a high skill level to perform these tasks. In particular, it is usual when configuring, deploying and testing a configuration for a new tariff and/or billing plan to require skilled staff to construct database scripts manually for the purpose of deploying and testing the configuration. Of course, the use of highly skilled personnel performing operations manually not only increases the cost but also contributes a substantial period of time in which to fully test any proposed tariff and/or billing configuration.

Despite requiring operators to have a high level of skill and understanding with respect to the information technology systems and the test environments in which new tariff and billing plan configurations are generated, deployed and tested, the performance of operations manually gives rise to a high degree of human error which in turn further delays the progress of generating, deploying and testing a configuration for a new tariff and/or billing plan. For example, having devised a configuration for a new tariff and/or billing plan, which is usually embodied in the form of computer program code, it is generally necessary to deploy the program code representing the new tariff and/or billing configuration across all active data bases in a telecommunications system in order to maintain consistency with the existing configuration in the production environment. Generally, a telecommunications service provider will have established several environments for performing necessary functions such as a reporting environment, a testing environment and a back up environment for disaster recovery.

For some systems, it can be necessary to generate, deploy and test a configuration for a new tariff and/or billing plan which is configured across more than twenty (20) database tables with the database table residing in different databases hosted on different platforms. In deploying such a system, the operator(s) would require an in-depth knowledge of databases, including tables and their relationships.

If, during manual deployment, the operator(s) fail to enter or correctly alter data for a deployment, then the deployment of that configuration may fail, or the deployed configuration may fail when testing the configuration after deployment. As the timeframe for generation, deployment and testing of a configuration for a tariff and/or billing plan can span several weeks, any such failures can be both time consuming and costly.

Having devised a new tariff or billing plan, it is necessary to generate, deploy and test the new configuration for the plan in a test environment before implementing same in a production environment. When operating within the test environment, deploying the computer program code to effect a configuration for a new tariff or billing plan generally requires an operator to deploy the computer program code to individual data bases in the test environment in a particular order to avoid errors. Further, these functions are generally performed by an operator executing detailed instructions from a UNIX server and hand keying text commands in order to execute the computer program code in the respective databases. Of course, such activities necessarily incur a degree of human error particularly in relation to ensuring that computer program code representing the new tariff or configuration plan is executed in the correct order and in relation to the correct databases.

Accordingly, in view of the previously mentioned emerging market trends there is a need for telecommunication service providers to reduce the time required to configure, deploy and test configurations for new tariff plans in order to facilitate the implementation of new tariff or billing arrangements. In turn, any improvement to the efficiency of this process will facilitate the attraction of new and/or existing consumers to a newly devised tariff or billing plan.

In the context of this overall requirement, there is a specific need to reduce the time presently required to deploy configurations for new tariff and/or billing plans for products and/or services into multiple data bases in a test environment.

The reference to any prior art in this specification is not, and should not be taken as, an acknowledgement or any form or suggestion that the prior art forms part of the common general knowledge to those skilled in the relevant field of technology at the priority date of the claims herein.

### SUMMARY OF THE INVENTION

In one aspect, the present invention provides a method, in particular a computer implemented method for an operator to deploy a tariff and/or billing configuration for a tariff and/or billing plan represented by computer program code, the deployment being effected by operation of a user interface, the method including the steps of the operator:
identifying at least one configuration to be deployed;
selecting the at least one configuration by use of the user interface; and
associating the at least one configuration with at least one environment in which the computer program code representing the configuration must be executed to effect the configuration.

Advantageously, there is provided an improved man machine interaction, wherein in particular due to the possibility to associate at least one configuration with at least one environment customized and appropriate computer program code may be provided in an easy and understandable manner. Hence, by the method according to the present application, the user may be relieved from the mental task to establish specific/customized computer program code and - thus - computer program code that may be specifically designed to a given and/or predefined configuration may be provided in a simple and efficient manner.

In one embodiment, the deployment functionality is provided to an operator in the form of a module that separates the functionality into three groupings, namely, Configuration, Deployment and Audit Trail and Logging.

Consistent with the graphical user interface methodology of enabling an operator to effect functions, each of the three groupings of functionality may be associated with a "tab" or separate display area on an operator's screen.

In this embodiment, the configuration tab groups together functions that relate to tariff and/or billing configurations and the environments to which they can be deployed. For example, configurations may be added, removed or modified. Similarly, the environments to which configurations may be deployed can also be added, removed or modified.

In one embodiment, the ability of an operator to access configurations and environments for the purpose of effecting functions such as adding, removing or modifying, is controlled by a system administrator. In this particular embodiment, the system administrator may provide access to operators on an as required basis and only in the event that an operator has sufficient access rights may they be able to select the target environments for deployment of particular configurations.

In the above described embodiment, the functions associated with the Deployment tab may be further sub-divided into three separate groups, namely, Environment Selection, Input Verification and Execution. As the name suggests, having selected the Environment Selection, an operator may then view a list of available environments to which they can deploy configurations.

Having selected the environments, the operator may then select configurations that they intend to deploy. In this regard, a list of available configurations may be presented to the operator as graphical objects and the operator may select and place configurations to be deployed into a pre-determined directory. Once configurations and environments have been selected, the operator may then proceed to the Execution group of functions which will prepare and deploy configurations to the respective environments.

In one embodiment, validation and verification checks are performed to determine whether an operator has proposed an erroneous deployment. Error messages may be provided to an operator to highlight errors in a proposed deployment such as dependency conflicts with respect to the computer program code representing the configurations. In one particular embodiment, a report may be generated to provide details of a proposed deployment to an operator. This report may identify problems and/or confirm successful deployment of configurations.

In one embodiment, a "commit all" and a "commit none" feature is provided where the operator may restore environments to their previous condition in the event that an error occurs during the deployment process.

The Audit Trail and Logging function is provided in embodiments of the invention to generate an audit trail that records relevant aspects of a deployment. In one embodiment, a comprehensive log is maintained for each environment affected by a deployment with the log recording information relating to the execution status and any warnings or exceptions that may have occurred. In one embodiment, an execution log is maintained that records the computer program code representing a configuration that is executed in a particular environment. In the event that the computer program code is a Structured Query Language (SQL) script and the environment is a relational database, the execution log maintains a record of the SQL scripts that were executed to effect the configuration and any tables or databases affected.

Embodiments of the invention overcome significant difficulties previously experienced by operators presented with the task of deploying configurations in test or production environments. In particular, a graphical user interface representing objects such as configurations and environments as objects that may be selected and manipulated as objects, avoids the requirement for an operator to have a detailed knowledge of a computer operating system such as UNIX. Further, presenting a list of all available configurations and/or environments accessible to an operator for the purpose of manipulating those objects to perform a deployment task avoids a significant amount of hand keying text based commands that is presently required. Unfortunately, hand keying text based commands usually results in a significant amount of incorrect hand keying information that leads to execution errors.

Whilst the method, in particular a computer implemented method of the invention may be used to deploy configurations that have been developed externally to the Deployment module, in one particular embodiment, configurations that have been developed in a complimentary module are made available to the Deployment module. In this particular embodiment, the configurations are prepared in accordance with a pre-determined naming scheme that enables an operator to determine the order in which the computer program code is to be executed in order to avoid conflicts and errors. This embodiment provides a further benefit to the operator tasked with deploying configurations as the Deployment module may determine from the pre-determined naming scheme the relevant order in which to execute the computer program code to avoid errors that would otherwise occur thus reducing the operators load even further. Previously, operators needed to be concerned about dependencies between the computer program code in individual configurations as an incorrect sequence of execution could result in errors.

In another aspect, the present invention provides a system for deploying a tariff and/or billing configuration for a tariff and/or billing plan represented by computer program code, the system including:
a computer generated graphical user interface including a display upon which configurations and environments are represented as graphical objects;
a selection means enabling an operator to propose a deployment by selecting one or more configurations and associating same with one or more environments; and
a means to commit the proposed deployment and thereby incorporate the computer program code representing the one or more configurations into the one or more environments for subsequent execution.

In an embodiment, the system conducts a range of validation and verification checks to determine whether a proposed deployment contains any errors prior to "committing" the deployment by comparing the proposed deployment with system rules. In the event that any system rules are violated, the operator is provided with a warning regarding the errors in the proposed deployment.

In another embodiment, the system records all of the details of a proposed deployment including the order of the files entered by the operator for the proposed deployment and in the event that there is an error in the proposed deployment of configurations, the operator is provided with the option of reversing the deployment. This function includes reversing the entry of computer program code representing configurations into environments. In an embodiment, in the event that a file is determined to be the cause of an error during execution of the deployment, the execution is halted.

In an embodiment, the user interface is a graphical user interface and the configurations and environments are represented as graphical objects. In another embodiment, the user interface is a tab based menu arrangement.

The techniques described herein may be embodied by stored, executable instructions that are executed by one or more suitable processing devices such as personal or server computers. The executable instructions may result in computer instructions that are implemented integrally to a computer or over a network using separate software segments. The executable instructions may also include segments of existing software that effect functions in cooperation with dedicated segments of computer instruction code developed specifically for the present invention.

In an exemplary embodiment, the interface with an operator is a web-enabled interface that is implemented on a device connected to a data communications network such as the internet.

According to another aspect, a computer program product is provided. The computer program product may comprise computer-readable instructions which may be stored on a computer-readable medium or provided as a data signal, such that when the instructions are loaded and executed on a device the instructions cause the device to perform operations according to the method of any one of the preceding claims.

### BRIEF DESCRIPTION OF THE DRAWINGS

One or more embodiments of the present invention are described below with reference to the accompanying figures in which:
Figure 1 is a block diagram detailing the conceptual layers of a proposed solution architecture according to one embodiment of the invention;
Figure 2 is a summary level flow chart of the primary steps involved in the deployment of a newly configured tariff plan according to one embodiment of the invention;
Figure 3 is a more detailed flow chart providing a greater level of detail with respect to the individual steps involved in the deployment of a newly configured tariff plan; and
Figure 3A is an example Summary Report according to an embodiment of the invention;

### DESCRIPTION OF EMBODIMENTS OF THE INVENTION

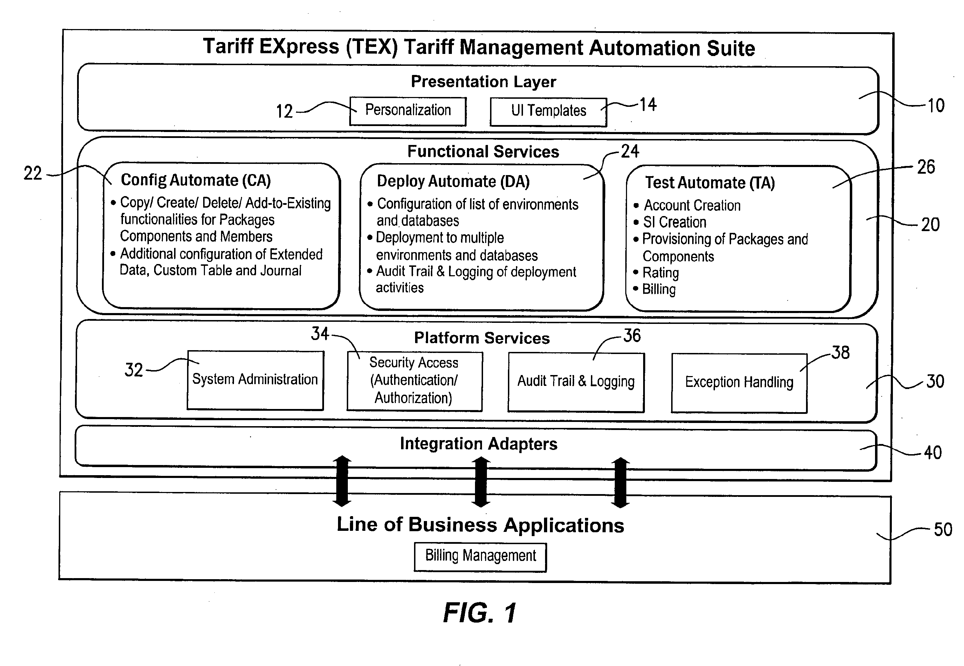

With reference to Figure 1, a block diagram detailing the conceptual layers of a solution architecture is provided. In this solution architecture, the primary conceptual layers include a presentation layer (10), a functional services layer (20), a platform services layer (30), an integration adapters layer (40) and the tariff management automation suite including these layers interfaces with a range of existing business applications (50).

The presentation layer (10) includes a personalization application (12) and user interface (Ul) templates (14).

The functional services layer (20) includes software for performing the functions of configuration automation (22), a deployment automation (24) and test automation (26). The user interface templates (14) and personalization application (12) provided in the presentation layer (10) interface with each of the automation functional services (22, 24 and 26) as defined in the functional services layer (20) thus affording operators a consistent user interface experience when invoking functions from any of the automation components in the functional services layer (20).

The tariff management automation suite as depicted in Figure 1 also includes a platform services layer (30) which includes a system administration component (32), a security access component (34), and audit trail and logging component (36) and an exception handling component (38).

Software components residing in the integration adaptors layer (40) enable the functional components of the tariff management automation suite to interface with existing business applications of the telecommunications service provider. As an example, in Figure 1, the business applications layer (50) includes a functional software component (52) in the form of a billing management software program.

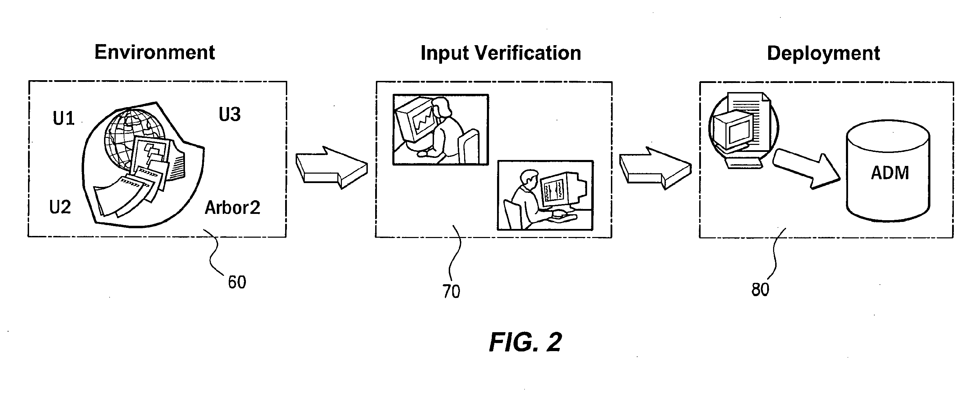

Figure 2 provides a summary level flow chart of the primary steps involved in the deployment of a new configured tariff plan in which three primary steps are detailed. In this regard, the first step enables operators to designate the various environments (60) that will be affected by a newly configured tariff configuration. Generally, the configuration of a tariff or billing plan will include many scripts (i.e. files containing programming code to perform certain actions) that need to be deployed in a particular order in order to avoid errors. With respect to the telecommunication services industry, billing and client management operations are generally effected by relational data bases that are managed by the execution of SQL (Structured Query Language) scripts. These scripts perform actions such as inserting, updating and/or deleting entries from data bases. In addition to these basic functions, scripts can be used to perform complex logical functions such as searching and sorting.

In any event, a newly configured tariff or billing plan will often require the inclusion of many SQL scripts in various data bases in order for the tariff or billing configuration to be effected.

The input verification module (70) performs verification and validation functions to ensure that data entered by the operator is valid and does not violate system rules. For example, with respect to performing a validation check, the input verification module (70) checks to ensure that the "Account_No" field is populated with numbers only as alphabetic characters in any of these fields violates a system rule. Similarly, other checks are performed to ensure that a "component" is not placed before a "package" in the execution sequence as this would violate the execution ordering requirements of the system. Another example of a validation check would be a check to determine whether any Accounts were associated with non-existent parent Accounts which is clearly a violation of a system rule although this represents a common error when operators are required to manually enter deployment details.

With further reference to Figure 2, the deployment module (80) effects the function of deploying the scripts required to effect the new tariff and/or billing configuration to all the necessary data bases in order to effect the new tariff or billing plan.

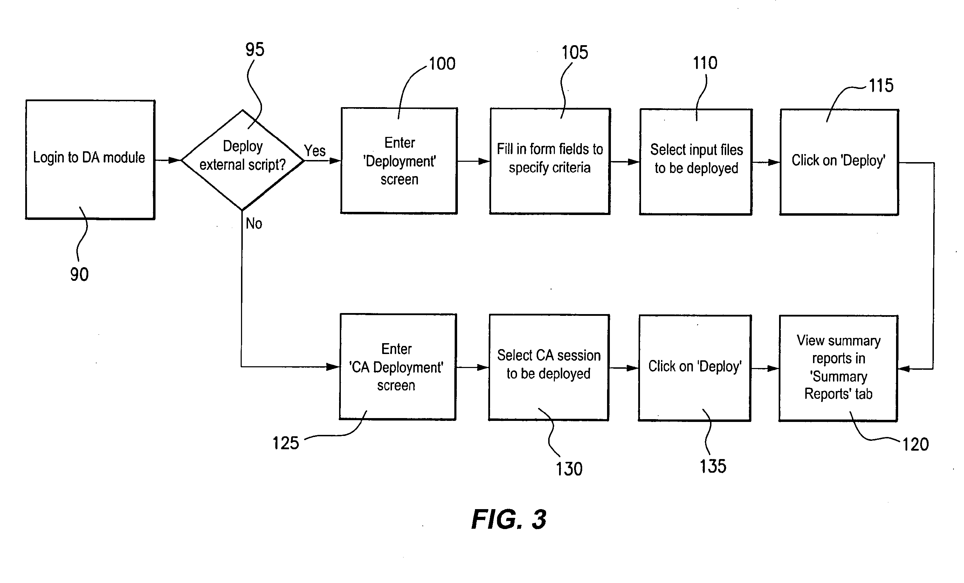

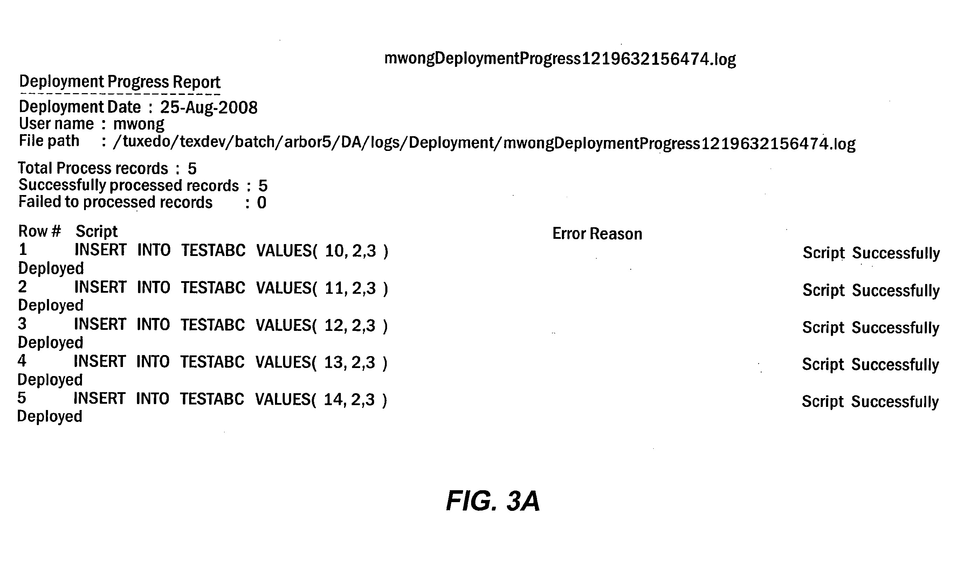

With reference to Figure 3, a more detailed flow chart providing a greater level of detail with respect to the individual steps involved in the deployment of a new tariff configuration is provided. At step 90, an operator logs into the deployment automation module and shortly thereafter at step 90 the operator indicates to the deployment automation module whether or not they require the deployment of an external script (95). In this regard, in the embodiment described in Figure 3, the deployment automation module is operable to deploy external configuration scripts generated by highly skilled operators or alternatively, the deployment automation module may deploy scripts generated by a configuration automation module (22).

In the event that an external script is to be deployed, the process proceeds to step 100 wherein the operator is presented with a graphical user interface (GUI) in the form of a deployment screen. At step 105, the operator completes the on-screen fields to specify the relevant criteria pertaining to the external scripts to be deployed. This step identifies the external scripts to be deployed and also assists the operator in selecting the necessary environments to which the scripts will be deployed to effect the configuration.

At step 110, the operator selects the input files containing the external scripts that require deployment and at step 115, the operator selects the "*deploy*" function which then deploys the external scripts to the various data bases in the test environment. Having selected the "*deploy*" function, the process proceeds to step 120 wherein the operator is provided with a summary report by selecting the "*summary reports*" tab. Figure 3A is an example Summary Report that confirms to the operator that all scripts have been successfully deployed.

As compared with the present manual process for deploying external scripts, this embodiment of the invention enables operators to select an environment and data base schema and provide the relevant script to be executed by use of the graphical user interface. Execution of the script may be effected by simply selecting the requisite on-screen "button" in the graphical user interface. The present embodiment avoids requiring the user to manually store scripts in a specific directory in a Unix server and the subsequent hand keying of commands to execute same.

Referring back to step 95, in the event that the operator elects to deploy an internal script generated by the configuration automation module (22), the process proceeds to step 125 wherein an alternative deployment screen is displayed to the operator. At this point, the process proceeds to step 130 wherein the operator may select a particular configuration automation session to be deployed and having selected a particular session the process proceeds to step 135 where the operator may select the "*deploy*" function. Again, as for processing external script, the process then proceeds to step 120 wherein the operator is provided with a summary report by selection of the "*summary report*" tab.

As compared with deploying external scripts, when an operator deploys scripts generated by the configuration automation module (22) the operator is simply required to select which committed session from the configuration automation module that they require to be deployed. The requisite ordering of scripts and internal dependencies therebetween is embodied in the committed session of the configuration automation module and hence does not require any manual intervention on the part of the operator during the deployment process.

It will be appreciated by persons skilled in the relevant field of technology that numerous variations and/or modifications may be made to the invention as detailed in the embodiments without departing from the spirit of the scope of the invention as broadly described. The present embodiments are, therefore, to be considered in all aspects as illustrative and not restrictive.

For the purposes of this specification and claim the terms "tariff" and "billing" should be considered to have the same meaning.

## Claims

1. A computer implemented method for an operator to deploy a tariff and/or billing configuration for a tariff and/or a billing plan represented by computer program code, the deployment being effected by operation of a user interface, the method including the steps of the operator:
identifying at least one configuration to be deployed;
selecting the at least one configuration by use of the user interface; and
associating the at least one configuration with at least one environment in which the computer program code representing the configuration must be executed to effect the configuration.

2. A computer implemented method according to claim 1 including the step of the operator committing the proposed deployment for execution wherein the computer program code representing the at least one configuration is incorporated for execution in the at least one environment to which the configuration has been associated.

3. A computer implemented method according to claim 2 including the step of recording the order of the files entered by the operator for the proposed deployment for subsequent execution of the files in the same order as entry when executing the deployment.

4. A computer implemented method according to claim 3 including a step prior to committing a proposed deployment for execution wherein the proposed deployment is checked for errors as compared with a set of pre-determined rules.

5. A computer implemented method according to either claim 3 or claim 4 including the step of reporting any identified errors to the operator.

6. A computer implemented method according to either claim 4 or claim 5 including the step of reversing a proposed deployment in the event that errors are located wherein the step of reversing a deployment includes extracting any computer program code representing a configuration from any environments into which the computer program code has been incorporated for subsequent execution.

7. A computer implemented method according to claim 6 wherein the record of the order in which the operator entered files for the proposed deployment is accessed and during the step of reversing the proposed deployment, the files containing the computer instruction code representing the configurations are extracted in the reverse order as compared with their recorded entry by the operator.

8. A computer implemented method according to any one of claims 3 to 7 where in the event that a file is determined to cause an error during execution of the deployment, the execution is halted and no further files are executed.

9. A computer implemented method according to any one of claims 3 to 8 wherein the comparison of a proposed deployment with pre-determined rules includes any one or more of the following:
a comparison to determine whether the operator has sufficient access rights to effect the proposed deployment;
a comparison to determine whether any conflicts in configuration dependencies exist;
a comparison to determine whether any unacceptable characters are contained in any fields; and
a comparison to determine whether any unacceptable associations are proposed.

10. A system for deploying a tariff and/or billing configuration for a tariff and/or billing plan represented by computer program code, the system including:
a computer generated graphical user interface including a display upon which configurations and environments are represented as graphical objects;
a selection means enabling an operator to propose a deployment by selecting one or more configurations and associating same with one or more environments; and
a means to commit the proposed deployment and thereby incorporating the computer program code representing the one or more configurations into the one or more environments for subsequent execution.

11. A system according to claim 10 wherein the proposed deployment is committed for execution thereby resulting in the computer program code representing the configurations being incorporated into the respective environments with which the configurations have been associated.

12. A system according to either claim 10 or claim 11 wherein a proposed deployment is checked for errors according to pre-determined rules.

13. A system according to claim 12 wherein a proposed deployment is reversed thereby resulting in any computer program code representing one or more configurations being extracted from any environments with which the configuration has been associated.

14. A system according to any one of claims 10 to 13 wherein the user interface is a graphical user interface and the configuration and environments are represented as graphical objects.

15. A system according to any one of claims 10 to 14 wherein the user interface is a tab based menu arrangement.
